# FASCICULE DE BREVET EUROPEEN

(11) **EP 0 610 443 B1**
(45) Date de publication et mention de la délivrance du brevet: **29.05.1996**
(21) Numéro de dépôt: 93900222.6
(22) Date de dépôt: 04.11.1992
(51) Int. Cl.: B60J 3/02

(54) **DISPOSITIF D'ARTICULATION COMPLEXE TELESCOPIQUE AVEC FREINS POUR PARE-SOLEIL DE VEHICULE AUTOMOBILE**
ZUSAMMENGESETZTE TELESKOPISCHE GELENKVORRICHTUNG FÜR FAHRZEUGSONNENBLENDER
TELESCOPIC COMPLEX ARTICULATED VEHICLE SUN VISOR DEVICE FITTED WITH A BLOCKING SYSTEM

(30) Priorité: 06.11.1991 FR 9113963
(43) Date de publication de la demande: 17.08.1994
(73) Titulaire: Lunel, Germain Michel, F-64200 Biarritz (FR)
(72) Inventeur: Lunel, Germain Michel, F-64200 Biarritz (FR)
(86) Numéro de dépôt international: FR9201025
(87) Numéro de publication internationale: WO9308998

(56) Documents cités:
- FR-A- 2 024 043
- US-A- 1 772 233
- US-A- 1 781 545
- US-A- 1 913 277

## Description

La présente invention concerne un dispositif d'articulation complexe télescopique freins pour pare-soleil de véhicule automobile.

Les pare-soleil actuellement utilisés sont trés limités en nécessitant une variation de position de par la sinuosité de la route en étant inefficace par faible angle solaire et inadaptable aux conducteurs de faible taille.

Le document F R-A -2 024 043 décrit un pare-soleil coulissable avec pince de maintien et d'orientation sur une tige fixée par ventouses sur le pare-brise. Le corps de ce pare-soleil est composé de deux parties reliées par une charnière oblique dont la seule vocation est d'en permettre le dégagement rapide du champ de vision. L'invention concerne un pare-soleil perfectionné permettant une meilleure protection de face et latéralement en utilisation simple ou double en étant abaissable tout en restant inclinable, ce qui permet de conserver l'assiette idéale de protection malgré la variation des déclivités.Plus précisément, l'invention a pour objet un pare-soleil comprenant:
- Une contrepartie destinée à être fixée sur un véhicule,
- Un bras monté sur la contrepartie,
- Un corps principal monté pivotant et coulissant sur le bras,
- Des moyens de freinage destinés à immobiliser le corps principal dans une position longitudinale prédéterminée le long du bras ( Pare-soleil du type divulgué dans F R-A 2 024 043), caractérisé en ce que:
- Le montage pivotant et coulissant du corps principal sur le bras est constitué par un tube monté abaissable sur ledit bras,
- Un rabat latéral est articulé sur le tube,
- Le corps principal est muni de moyens servant au blocage du tube sur le corps principal et au maintien du rabat dans une orientation déterminée par rapport au corps principal et au bras,et,
- Le pare-soleil comprend en outre des moyens d'immobilisation dans une position angulaire prédéterminée du bras par rapport à la contrepartie.

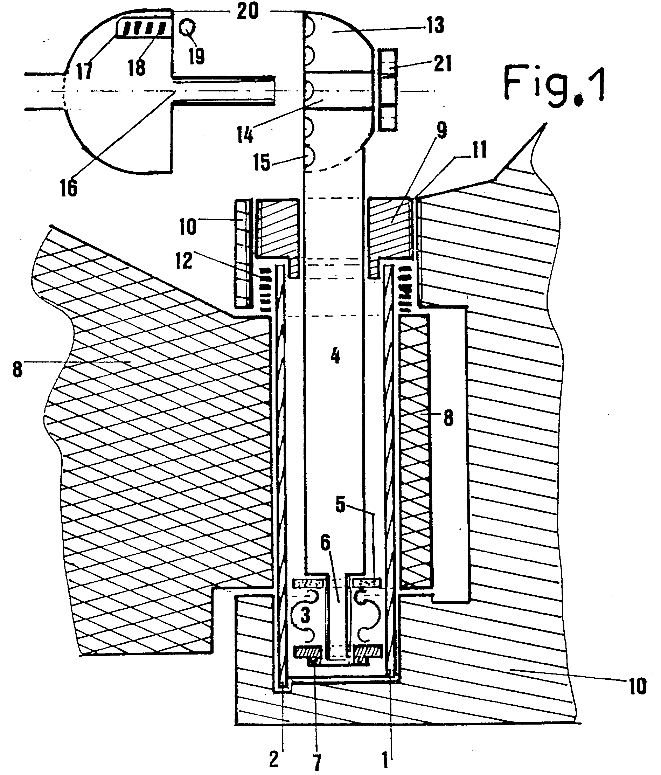

Le dispositif selon l'invention est adaptable sur des pare-soleil simples, mais il est plus particulièrement étudié pour des accessoires à deux éléments principaux, et permet de par sa composition de remédier aux inconvénients précisés. ( Différents détails de réalisation sont précisés dans les revendications 2 à 7 dépendantes.) L'invention sera mieux comprise à la lumière de la description ci-dessous du mode de réalisation conforme à son principe faite en référence au dessin dans lequel la figure 1 est une vue partielle en coupe du mode de réalisation conforme à l'invention.

La figure 1 représente en coupe le dispositif d'articulation complexe constituant et recevant un système télescopique d'abaissement général et graduel inclinable et orientable avec freins angulaire, vertical, et horizontaux. Il comporte un tube télescopique (1) à ergot (2),assemblant les pièces corps principal (10) le rabat (8) latéral, le ressort (12), l'écrou (9) bloquant cet ensemble par les filetages (11). Une tige ronde bras inclinable télescopique (4) pénétrant dans le tube (1) le recevant avec un prolongement fileté (6) recevant la rondelle (5) et l'écrou (7) comprimant les ressorts (3) qui exercent en réaction une pression sur le tube (1) en constituant un frein horizontal à l'orientation de l'accessoire et d'abaissement général ou graduel de l'accessoire par l'utilisateur. Cet abaissement télescopique est limité dans sa course par la butée de la rondelle (5) sur l'écrou (9). Ce dernier vient en butée sur le tube (1) en comprimant le ressort (12) sur le rabat (8) en opposition sur le corps principal (10) et constituant ainsi un frein d'orientation du rabat (8). La tige télescopique (4) est guidée par l'écrou (9) et se termine en son embout supérieur par une forme demi-sphérique (13) pourvue de cuvettes périphériques (15) et en son axe du percement (14), ce dernier aménagement lui permet de recevoir sa contrepartie au prolongement fileté (16) comportant le logement (17) contenant le ressort (18) et la bille (19), constitue un bras articulaire télescopique (20) avec frein angulaire par l'action de l'écrou (21) recevant la contrepartie filetée (16) opposant en réaction les cuvettes (15) à la bille (19) repoussée par le ressort (18) dans le logement (17).

L'abaissement de pare-soleil avec ou sans rabat peut être réalisé différemment par une séparation de la fonction télescopique et articulation du rabat dont les dessins ci-annexés en démontrent l'invention.

Ce dispositif Fig 1 permet dans ses limites l'abaissement graduel et général de l'ensemble du pare-soleil tant ouvert en utilisation maximum que fermé en utilisation partielle de face ou latéralement par rotation sur le nouveau dispositif Fig.1 ou celui d'origine,à la hauteur désirée tout en restant inclinable. Suivant les changements de la déclivité de la voie, il permet de varier mais surtout de conserver l'assiette idéale de protection tout en étant abaissable ou relevable sans provoquer d'ouverture d'angle. Les différentes pièces peuvent être réalisées suivant les besoins en matières plastiques ou métalliques surmoulées ou habillées de tout complexe adéquat. Ce dispositif selon l'invention est particulièrement destiné à un pare-soleil de véhicule automobile.

## Revendications

1. Pare-Soleil comprenant une contre-partie (16) destinée à être fixée sur un véhicule, un bras (20,4) monté sur la contrepartie (16), un corps principal (10) monté pivotant et coulissant sur le bras (20,4), des moyens de freinage destinés à immobiliser le corps principal (10) dans une position longitudinale prédéterminée le long du bras (20,4), caractérisé en ce que le montage pivotant et coulissant du corps principal (10) sur le bras (20,4) est constitué par un tube (1) monté abaissable sur ledit bras, un rabat latéral (8) est articulé sur le tube (1), le corps principal (10) est muni de moyens servant au blocage du tube (1) sur le corps principal (10) et au maintien du rabat (8) dans une orientation déterminée par rapport au corps principal (10) et au bras (20,4), et le pare-soleil comprend en outre des moyens (17,18,19) d'immobilisation dans une position angulaire prédéterminée du bras (20) par rapport à la contrepartie (16).

2. Pare-soleil selon revendication 1, caractérisé en ce que le tube (1) comporte un ergot (2) et est bloqué au corps principal (10) par un écrou (9) qui le bute en se bloquant sur les filetages (11) dudit corps.

3. Pare-soleil selon revendications 1 et 2, caractérisé en ce qu'un dispositif articulé est constitué par le tube (1) qui assemble le corps principal (10) le rabat (8) et un ressort (12), ce dernier est interposé entre ledit rabat (8) et l'écrou (9).

4. Pare-soleil selon revendications 1,2,3, caractérisé en ce qu'un frein d'orientation du rabat (8) par rapport au corps principal (10) est constitué par l'écrou (9) qui comprime le ressort (12) sur le rabat (8) lequel est freiné par l'opposition dudit corps.

5. Pare-soleil selon revendications 1,2,3, caractérisé en ce que le dispositif est abaissable et orientable par le tube (1) qui reçoit de façon télescopique une tige (4) ronde du bras (20), laquelle tige est guidée dans le tube (1) par l'écrou (9).

6. Pare-soleil selon revendications 1,2,3,5, caractérisé en ce que l'ensemble du dispositif est freiné tant dans l'abaissement télescopique que dans l'orientation par un système situé en bout de la tige (4), cedit système est constitué d'un prolongement fileté (6) recevant une rondelle (5) et un écrou (7) qui comprime entre-eux des ressorts (3) lesquels exercent en réaction une pression sur l'intérieur du tube (1).

7. Pare-soleil selon revendications 1,2,3,5,6, caractérisé en ce que l'abaissement du dispositif est limité par l'écrou (9) qui reçoit en position basse la butée de la rondelle (5) du frein d'abaissement.

## Claims

1. Sun visor composed of a backside base (16) designed to be fixed on the vehicle, an arm (20,4) installed on the backside base (16), a main body (10) installed pivoting and sliding on the arm (20,4), a breaking systems designed to secure the main body (10) on a preset longitudinal position along the arm (20,4), characterized as for the pivoting and sliding assembly of the main body (10) on the arm (20,4) is formed by a tube (1) assembled lowerable on the said arm,a lateral flap (8) is articulated on the tube (1), the main body (10) is equipped with a system allowing to lock the tube (1) on the main body (10) to keep the flap (8) in a set direction with regard to the main body (10) and to arm (20,4), and the sun visor further comprises other securing systems (17,18,19) in a preset angular fixed position of the arm (20) with respect to backside base (16).

2. Sun visor according claim 1, characterized as for the tube (1) has a pin (2) and is locked to the main body (10) by a nut (9) which stops it by blocking on the threading (11) of the said body.

3. Sun visor according claims 1 and 2, characterized as for an articulated device is composed of the tube (1) which assembles the main body (10) the lateral flap (8) and a spring (12), this latter is interposed between the said flap (8) and the nut (9).

4. Sun visor according claims 1,2,3, characterized as for a brake position of the flap (8) with respect to the main body (10) is formed by the nut (9) which compresses the spring (12) on the flap (8) which is kept by the opposition of the said body.

5. Sun visor according claims 1,2,3, characterized as for the devise is lowerable and swivelling by the tude (1) that receives in a telescopic way a round rod (4) of the arm (20), which rod is guided in the tube (1) by the nut (9).

6. Sun visor according claims 1,2,3,5, characterized as for the whole device is kept as in the telescopic lowering as well as in the direction by a system located at the rod end (4), this said system is formed by threaded way (6) receiving a washer (5) and a nut (7) which compresses between them springs (3) which generates a pressure on the inside of the tube (1).

7. Sun visor according claims 1,2,3,5,6, characterized as for lowering the device is limited by the nut (9) which receives in down position the stop of the washer (5) of the lowering brake.

## Patentansprüche

1. Sonnenblende, bestehend aus einem Gegenstück (16), das dafür vorgesehen ist, am Fahrzeug befestigt zu werden, einem Arm (20,4), der auf dem Gegenstück (16) montiert ist, dem Hauptgestell (10), das schwenkbar und verschiebar auf dem Arm (20,4) montiert ist, aus Bremsvorrichtungen, die dafür vorgesehen sind, das Hauptgestell (10) in einer vorgegebenen Längsposition entlang des Armes (20,4) zu immobilisieren, die Besonderheit besteht darin, dass der schwenkbare und verschiebbare Aufbau des Hauptgestells (10) auf dem Arm (20,4) aus einem Tubus (1) besteht, der auf dem genannten Arm senkbar montiert ist, eine seitliche Klappe (8) ist am Tubus (1) angeschlossen, das Hauptgestell (10) ist mit Vorrichtungen versehen, die zur Blockierung des Tubus (1) auf dem Hauptgestell (10) dienen und zum Halt der Klappe (8) in einer festgelegten Orientierung im Verhältnis zum Hauptgestell (10) und zum Arm (20,4), und die Sonnenblende besitzt darüber hinaus Festellmöglichkeiten (17,18,19) in einer vorgegebenen Winkelposition des Armes (20) im Verhältnis zum Gegenstück (16).

2. Die Sonnenblende gemäss der Forderung 1, hat die Besonderheit, dass der Tubus (1) einen Anschlag (2) besitzt und am Hauptgestell (10) blockiert wird durch eine Mutter (9), die ihn anschlägt, indem sie sich an den Gewinden (11) des genannten Gestells blockiert.

3. Die Sonnenblende gemäss der Forderungen 1 und 2, hat die Besonderheit, dass eine schwenkbare Vorrichtung aus dem Tubus (1) besteht, der das Hauptgestell (10), die Klappe (8) und eine Federung (12) verbindet, letztere ist zwischen der genannten Klappe (8) und der Mutter (9) eingesetzt.

4. Die Sonnenblende gemäss der Forderungen 1, 2, 3, hat die Besonderheit, dass eine Orientierungsbremsung der Klappe (8) im Verhältnis zum Hauptgestell (10) durch die Mutter (9) entsteht, die die Federung (12) zusamendrückt auf die Klappe (8), welche durch den Widerstand des genannten Gestells gebremst wird.

5. Die Sonnenblende gemäss der Forderungen 1, 2, 3, hat die Besonderheit, dass die Vorrichtung durch den Tubus (1) senkbar und orientierbar ist, dieser erhält auf teleskopische Art und Weise eine runde Stange (4) des Armes (20), diese Stange wird im Tubus (1) durch die Mutter (9) geführt.

6. Die Sonnenblende gemäss der Forderungen 1, 2, 3, 5, hat die Besonderheit, dass die gesamte Vorrichtung sowohl in der teleskopischen Absenkung als auch in der Orientierung durch ein System, dass sich am Ende der Stange (4) befindet, gebremst wird, das genannte System setzt sich aus einer Verlängerung mit Gewinde (6) zusammen, das eine Scheibe (5) und eine Mutter (7) erhält, die untereinander Federungen (3) zusammendrückt, welche als Reaktion darauf einen Druck im Inneren des Tubus (1) ausüben.

7. Die Sonnenblende gemäss der Forderungen 1, 2, 3, 5, 6, hat die Besonderheit, dass das Absenken der Vorrichtung begrenzt wird durch die Mutter (9), die in unterer Position den Anschlag der Scheibe (5) der Senkbremsung erhält.
